# EUROPEAN PATENT APPLICATION

(11) **EP 4 712 162 A1**
(43) Date of publication of application: **18.03.2026**
(21) Application number: 25787082.4
(22) Date of filing: 04.04.2025
(51) Int. Cl.: H01M 4/36, H01M 4/525, H01M 4/62, H01M 10/052, H01M 4/02

(54) **CATHODE ACTIVE MATERIAL FOR ALL-SOLID-STATE BATTERY, AND ALL-SOLID-STATE BATTERY CATHODE AND ALL-SOLID-STATE BATTERY, WHICH COMPRISE SAME**

(30) Priority: 12.04.2024 KR 20240049273
(71) Applicant: LG Energy Solution, Ltd., Seoul 07335 (KR)
(72) Inventor: KIM, Myeongsoo, Daejeon 34122 (KR); KWON, Hyejin, Daejeon 34122 (KR); KANG, Sora, Daejeon 34122 (KR)
(74) Representative: Goddar, Heinz J.
(86) International application number: PCT/KR2025/004536
(87) International publication number: WO 2025/216490

(57) **Abstract**

The present invention relates to a positive electrode active material for all-solid-state batteries, and a positive electrode for all-solid-state batteries and an all-solid-state battery comprising same.

## Description

### [Technical Field]

This application claims the benefit of priority to Korean Patent Application No. 10-2024-0049273, filed April 12, 2024, the disclosures of which are incorporated herein by reference in their entirety.

The present invention relates to a positive electrode active material for all-solid-state batteries, and a positive electrode for all-solid-state batteries and an all-solid-state battery comprising the same.

### [Related Art]

Lithium secondary batteries are widely used as power sources for portable devices, including IT mobile devices, and in recent years, the market has grown from small lithium secondary batteries to medium- and large-sized secondary batteries. In particular, the use as batteries for vehicles has been rapidly increasing. In order for lithium secondary batteries to be used as power sources for electric vehicles, high energy density and high output characteristics are required, and, in particular, ensuring safety is considered to be of great importance.

Conventional lithium secondary batteries use liquid, non-aqueous organic electrolytes, which is associated with risks such as ignition and explosion. It is urgent to resolve these issues, as explosion accidents involving products utilizing these batteries continue to occur.

All-solid-state batteries replace these organic electrolytes with solid electrolytes, which means that all of the components of the battery, including electrodes and electrolyte, are solid, and the risk of ignition and explosion is eliminated due to the high safety of the solid electrolyte itself.

Candidates for solid electrolytes for all-solid-state lithium ion secondary batteries include gel-type polymer electrolytes, and sulfide-based and oxide-based solid electrolytes, among which sulfide-based solid electrolytes exhibit high lithium ion conductivity of at least 1X10⁻² S/cm, have a wide potential window of at least 5V, and have low degradation of properties even in extreme environments, and have great advantages in the design of lithium-ion secondary batteries having high energy density.

In the case of all-solid-state batteries with such sulfide-based solid electrolytes, the high interfacial resistance at the interface of the positive electrode active material and the sulfide-based solid electrolyte results in poor capacity utilization. The main causes of this interfacial resistance are proposed to be 1) the space charge layer phenomenon, which is the formation of a lithium deficient layer at the solid electrolyte interface due to the difference in chemical potential of the lithium ions in the positive electrode active material and the solid electrolyte, and 2) the formation of an interfacial impurity layer due to chemical reactions at the interface of the positive electrode active material and the solid electrolyte.

In order to solve the above problems, the technology of introducing a coating layer on the surface of the positive electrode active material is being applied, and lithium oxide of Li-M-O (wherein M is B, Al, Zr, P, Ti, Nb, or W) is known as the material of the coating layer. However, the introduction of a coating layer on the surface of the positive electrode active material does not prevent the degradation of all-solid-state batteries during long-term cycling.

### [Prior art]

### [Patent Reference]

Korean Laid-open Patent Publication No. 10-2017-0074624

### [Detailed Description of the Invention]

### [Technical Problem]

In order to solve the above problems, the inventors of the present invention conducted a various studies and found that coating the surface of the positive electrode active material with a lithium titanium compound can reduce the interfacial resistance between the positive electrode active material and the solid electrolyte. Furthermore, the present invention was completed by finding that placing the lithium titanium compound at the interface of the positive electrode active material, which is a secondary particle formed by the aggregation of a plurality of primary particles, can reduce side reactions and improve the lifetime characteristics of the all-solid-state battery.

Accordingly, it is an object of the present invention to provide a positive electrode active material for all-solid-state batteries that can not only reduce the interfacial resistance between the positive electrode active material and the solid electrolyte, but also improve the life characteristics of all-solid-state batteries.

It is also an object of the present invention to provide a positive electrode comprising a positive electrode active material for all-solid-state batteries, and an all-solid-state battery comprising the same.

### [Technical Solution]

To accomplish the above objectives, the present invention provides a positive electrode active material for all-solid-state batteries, comprising a core portion comprising a positive electrode active material and a lithium titanium compound; and a coating portion located on a surface of the core portion, comprising a lithium titanium compound,
wherein the core portion has a concentration gradient in which the titanium concentration decreases from the outermost surface toward the center.

The present invention also provides a positive electrode for all-solid-state batteries comprising the positive electrode active material of the present invention, a solid electrolyte, a conductive material, and a binder.

The present invention also provides an all-solid-state battery comprising the positive electrode of the present invention; a negative electrode; and a solid electrolyte layer between the positive electrode and negative electrode.

### [Advantageous Effects]

The positive electrode active material for all-solid-state batteries according to the present invention coats the surface of the positive electrode active material with a lithium titanium compound, so that the lithium titanium compound is located at the interface of the positive electrode active material, which is a secondary particle formed by aggregation of a plurality of primary particles, thereby suppressing side reactions occurring between the positive electrode active material and the solid electrolyte, and reducing interfacial resistance.

Accordingly, the all-solid-state battery comprising the positive electrode active material may have improved lifetime characteristics.

### [Brief Description of Drawing]

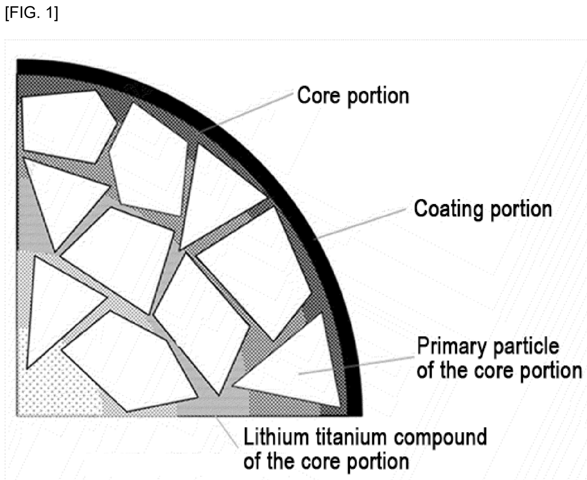

FIG. 1 is a cross-sectional view of a positive electrode active material for all-solid-state batteries of the present invention.

### [Best Mode]

The terms and words used in this specification and claims are not to be construed in their ordinary or dictionary sense, but rather in a sense and concept consistent with the technical idea of the present invention, based on the principle that the inventor may define the concept of a term as he/her sees fit to best describe his/her invention.

The terminology used in the present invention is used to describe certain examples only and is not intended to limit the invention. Expressions in the singular include the plural unless the context clearly indicates otherwise. In the present invention, the terms "comprise" or "have" are intended to designate the presence of the features, numbers, steps, actions, components, parts, or combinations thereof described in the specification, and are not to be understood as precluding the possibility of the presence or addition of one or more other features, numbers, steps, actions, components, parts, or combinations thereof.

Hereinafter, the present invention will be described in more detail.

All-solid-state batteries use a solid electrolyte to conduct lithium ions, and as a result, the movement of lithium ions by charging and discharging occurs in a solid state. In other words, since all-solid-state batteries only allow the movement of lithium ions through the actual contact site of the positive electrode and solid electrolyte, minimizing the interfacial resistance between the positive electrode and solid electrolyte can improve the performance of all-solid-state batteries.

However, at the actual contact site between the positive electrode and the solid electrolyte, side reactions occur, increasing the interfacial resistance. In addition, when an all-solid-state battery is operated over a prolonged period for several hundred cycles or more, side reactions may occur from the surface of the positive electrode active material, leading to problems such as the formation of a rock salt phase in the positive electrode active material.

Accordingly, the present invention seeks to provide a positive electrode active material that can reduce the interfacial resistance of the positive electrode and solid electrolyte, while improving the long-term life characteristics of the all-solid-state battery.

### Positive electrode active material for all-solid-state batteries

The present invention provides a positive electrode active material for all-solid-state batteries, comprising a core portion comprising a positive electrode active material and a lithium titanium compound; and a coating portion located on a surface of the core portion, comprising a lithium titanium compound,
wherein the core portion has a concentration gradient in which the titanium concentration decreases from the outermost surface toward the center.

The positive electrode active material of the present invention may have a core-shell structure, wherein the core portion includes a positive electrode active material and a lithium titanium compound, and the coating portion corresponding to the shell includes a lithium titanium compound.

The lithium titanium compound acts as a buffer and is included in the core portion as well as the coating portion. If only the coating portion contains a lithium-titanium compound, side reactions may occur on the outermost surface of the core when the all-solid-state battery is operated for hundreds of cycles or more, causing the positive electrode active material to transform into a rock salt phase. However, the present invention solves the above problem by including the lithium titanium compound not only in the coating portion but also in the core portion, thus providing an all-solid-state battery that can be operated for hundreds of cycles or more.

The core portion includes a positive electrode active material and a lithium titanium compound, wherein the lithium titanium compound in the core portion may have a concentration gradient in which the concentration of titanium decreases from the outermost surface of the core portion toward the center.

The concentration gradient means a gradient between the concentration at any point on the outermost surface of the core portion and the concentration at any point in the center of the core portion.

The positive electrode active material is a lithium metal oxide, wherein the lithium metal oxide may be a secondary particle formed by agglomeration of a plurality of primary particles. The lithium metal oxide may therefore be in a polycrystalline form. A primary particle means a single grain or crystallite. Voids and grain boundaries may exist between the primary particles constituting the secondary particles. For example, the primary particles may be spaced apart from neighboring primary particles in the secondary particles to form internal voids. Furthermore, the primary particles may contact neighboring primary particles to form a grain boundary. In the core portion, the lithium titanium compound may be present in the internal voids.

If the concentration of titanium on the outermost surface of the core portion and the concentration of titanium at the center of the core portion are the same, or if the concentration of titanium increases from the outermost surface of the core portion to the center, the migration of lithium ions between the primary particles may be hindered, resulting in an increase in ohmic resistance and charge transfer resistance, which may degrade the performance of the all-solid-state battery.

The diameter of the core portion may be a diameter of the secondary particles, wherein the diameter of the secondary particles may depend on the number of agglomerated primary particles, and may be 3 to 10 µm. The core portion can therefore have a diameter of 3 to 10 µm.

Further, in the core portion, the lithium titanium compound may be present within a distance of 5 µm, 4 µm, 3 µm, 2 µm, 1 µm, or 0.5 µm from the outermost surface of the core portion toward the center of the core portion. Therefore, only lithium metal oxide, a positive electrode active material, can be present in the center of the core portion.

The lithium metal oxide is a material capable of lithium-ion intercalation and deintercalation and is not particularly limited as long as it can be used as a positive electrode active material in a lithium ion secondary battery.

For example, the positive electrode active material may include, but not limited to, a layered compound such as lithium cobalt oxide (LiCoO₂), or lithium nickel oxide (LiNiO₂), or a compound substituted with one or more transition metals; the formula LiₓM_{y}O₂ (wherein M is at least one elected from the group consisting of Co, Mn, Ni, Al, Fe, V, Zn, Cr, Ti, Ta, Mg, Mo, Zr, W, Sn, Hf, Nd, or Gd, wherein 0<x≤1.5, and 0<y≤1); a lithium manganese oxide such as Li₁₊ₓMn₂₋ₓO₄ (wherein 0≤x≤0.33), LiMnO₃, LiMn₂O₃, or LiMnO₂; a lithium copper oxide (Li₂CuO₂); a vanadium oxide, such as LiV₃O₈; Ni site-type lithium nickel compound represented by LiNi₁₋ₓMₓO₂ (wherein M is Co, Mn, Al, Cu, Fe, Mg, B or Ga; and 0.01≤x≤0.3); a lithium manganese complex oxide represented by LiMn₂₋ₓMₓO₂ (wherein M is Co, Ni, Fe, Cr, Zn or Ta; and 0.01≤x≤0.1) or Li₂Mn₃MO₈ (wherein M is Fe, Co, Ni, Cu or Zn); a lithium manganese complex oxide with spinel structure, represented by LiNiₓMn₂₋ₓO₄; LiCoPO₄; or LiFePO₄.

The lithium titanium compound located in the core portion and the coating portion may be lithium titanium oxide. The lithium titanium oxide may be, but is not limited to, LiₓTi_{y}O₄ (wherein 0.8≤x≤1.4, and 1.6≤y≤2.2).

The coating portion may be located on a surface of the core portion, and more specifically on a surface of the secondary particles. Furthermore, the coating portion may comprise the lithium titanium compound, preferably be made of the lithium titanium compound.

The coating portion may mean that the lithium titanium compound is physically and/or chemically bonded to the surface of the core portion. Furthermore, the lithium titanium compound may cover the entire surface of the core portion, or may be distributed in an island type or flake type on the surface of the core portion, and if distributed in an island type or flake type, may be spaced apart from each other at predetermined intervals. Preferably, the lithium titanium compound may be distributed in such a way that it uniformly covers the entire surface of the core portion. If the lithium titanium compound is uniformly coated over the entire surface of the core portion, the coating layer of the lithium titanium compound can prevent direct contact between the positive electrode active material and the solid electrolyte, thereby inhibiting interfacial side reactions due to differences in the chemical potentials of the lithium ions. At the same time, the concentration of lithium is increased to provide a migration channel for lithium ions, which can reduce the interfacial resistance with the solid electrolyte.

Furthermore, the thickness of the coating portion may not be particularly limited in the present invention, but preferably be 10 to 200 nm, and more preferably 50 to 150 nm.

The lithium titanium compound in the coating portion may be included in an amount of 0.1 to 5 parts by weight, preferably 1 to 3 parts by weight, based on 100 parts by weight of the core portion. The interfacial resistance reduction effect can be obtained within the range of 0.1 to 5 parts by weight, and if it is outside the above range, there is a problem that the interfacial resistance increases, and the electrochemical properties of the all-solid-state battery including it cannot be improved.

The positive electrode active material for all-solid-state batteries of the present invention may be such that as the precursor of the titanium compound is mixed together and calcinated during the final step in the core portion manufacturing process, a coating portion comprising the lithium titanium compound is formed, and the lithium titanium compound in the coating portion is absorbed into the core portion comprising the positive electrode active material, and finally, a core portion comprising the positive electrode active material and the lithium titanium compound and a coating portion comprising the lithium titanium compound are formed. Furthermore, since the lithium titanium compound from the coating portion is absorbed to the core portion, the concentration of the lithium titanium compound present in the coating portion may be higher than the concentration of the lithium titanium compound present in the core portion. Further, in the core portion, the titanium may have a concentration gradient with decreasing concentration from the outermost surface of the core portion toward the center.

### Positive electrode for all-solid-state batteries

The present invention relates to a positive electrode for an all-solid-state battery, wherein the positive electrode may include a positive electrode active material, a solid electrolyte, a conductive material, and a binder, wherein the positive electrode active material is the positive electrode active material of the present invention as described above.

The positive electrode may comprise a positive electrode current collector and a positive electrode active material layer applied to one side or both sides of the positive electrode current collector. Thus, the positive electrode active material, solid electrolyte, conductive material, and binder may be included in the positive electrode active material layer.

The positive electrode current collector is intended for the support of the positive electrode active material layer and is not particularly limited as long as it has good conductivity and is electrochemically stable in the voltage range of the lithium secondary battery. For example, the positive electrode current collector may be any metal selected from the group consisting of copper, aluminum, stainless steel, titanium, silver, palladium, nickel, alloys thereof, and combinations thereof, wherein the stainless steel may be surface treated with carbon, nickel, titanium, or silver, and the alloy may preferably be an aluminum-cadmium alloy, but may also be a non-conductive polymer whose surface is treated with calcined carbon or a conductive material, or a conductive polymer.

The positive electrode current collector can form microscopic irregularities on its surface to strengthen the binding force with the positive electrode active material, and various forms can be used, such as films, sheets, foils, meshes, nets, porous bodies, foams, non-woven bodies, etc.

The solid electrolyte may comprise at least one selected from the group consisting of a sulfide-based solid electrolyte, a polymer-based solid electrolyte, and an oxide-based solid electrolyte, preferably a sulfide-based solid electrolyte.

The sulfide-based solid electrolyte contains sulfur (S) and exhibits ionic conductivity of a metal belonging to Group 1 or 2 of the periodic table, and it may include a Li-P-S-based glass or a Li-P-S-based glass-ceramic.

Specifically, the sulfide-based solid electrolyte may include at least one selected from the group consisting of Li₆PS₅Cl, Li₆PS₅Br, Li₆PS₅I, Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅, Li₂S-P₂S₅-SiS₂, Li₂S-P₂S₅-SnS, Li₂S-P₂S₅-Al₂S₃, Li₂S-GeS₂ and Li₂S-GeS₂-ZnS, and preferably include at least one selected from the group consisting of Li₆PS₅Cl, Li₆PS₅Br and Li₆PS₅I. The Li₆PS₅Cl, Li₆PS₅Br and Li₆PS₅I may be argyrodite-type solid electrolytes. Furthermore, the sulfide-based solid electrolyte may be doped with trace elements, for example, Li₆PS₅Cl additionally doped with bromine (Br).

The polymer-based solid electrolyte is a composite of a lithium salt and a polymeric resin, that is, a polymeric electrolyte material in the form formed by the addition of a polymeric resin to a solvated lithium salt, and may exhibit an ionic conductivity of about 1x10⁻⁷ S/cm or more, preferably about 1x10⁻⁵ S/cm or more.

Non-limiting examples of the polymeric resin include polyether-based polymers, polycarbonate-based polymers, acrylate-based polymers, polysiloxane-based polymers, phosphazene-based polymers, polyethylene derivatives, alkylene oxide derivatives such as polyethylene oxide, phosphate ester polymers, poly agitation lysines, polyester sulfides, polyvinyl alcohols, polyvinylidene fluorides, and polymers comprising ionic dissociating groups, and may include one or more thereof. Furthermore, the polymeric electrolyte may be a polymeric resin, for example, a branched copolymer, a comb-like polymer, and a cross-linked polymeric resin copolymerized with an amorphous polymer such as PMMA, polycarbonate, polysiloxane (PDMS), and/or phosphazene as a comonomer in a poly ethylene oxide (PEO) main chain, and may include one or more thereof.

In the polymeric solid electrolyte of the present invention, the lithium salt is an ionizable lithium salt, which can be expressed as Li⁺X⁻. The anions of the lithium salts are not specifically limited, but may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

The oxide-based solid electrolyte may comprise oxygen (O) and have the ionic conductivity of a metal belonging to Group 1 or 2 of the periodic table. For example, it may include at least one selected from LLTO-based compounds, Li₆La₂CaTa₂O₁₂, Li₆La₂ANb₂O₁₂(wherein A is Ca or Sr), Li₂Nd₃TeSbO₁₂, Li₃BO_{2.5}N_{0.5}, Li₉SiAlO₈, LAGP-based compounds, LATP-based compounds, Li₁₊ₓTi₂₋ₓAlₓSi_{y}(PO₄)_{3-y} (wherein 0≤x≤1, and 0≤y≤1), LiAlₓZr₂₋ₓ(PO₄)₃ (wherein 0≤x≤1), LiTiₓZr₂₋ₓ(PO₄)₃ (wherein 0≤x≤1), LISICON-based compounds, LIPON-based compounds, perovskite-based compounds, nasicon-based compounds, and LLZO-based compounds.

The conductive material is a material that electrically connects the current collector and the positive electrode active material and serves as a pathway for electrons to move from the current collector to the positive electrode active material, and can be used without restriction as long as it does not cause chemical changes in the lithium secondary battery and has porosity and conductivity.

For example, porous carbon-based materials can be used as the conductive material, wherein carbon-based material includes carbon black, graphite, graphene, activated carbon, and carbon fiber; and metallic fibers such as metal mesh; metallic powders such as copper, silver, nickel, or aluminum; or organic conductive materials such as polyphenylene derivatives. The conductive materials may be used alone or in combination.

Currently commercially available products as a conductive material include Acetylene Black (from Chevron Chemical Company or Gulf Oil Company), Ketjen Black EC (from Armak Company), Vulcan XC-72 (from Cabot Company), and Super P (from MMM). Examples may include acetylene black, carbon black, and graphite.

Further, the binder further increases the binding force between the components comprised of the positive electrode, or between the components and the current collector, and any binder known in the art may be used.

For example, the binder may be one or a mixture or copolymer of two or more selected from the group consisting of a fluoroplastic binder comprising polyvinylidenefluoride (PVdF) or polytetrafluoroethylene (PTFE); a rubber-based binder comprising styrene butadiene rubber (SBR), acrylonitrile-butadiene rubber, or styrene-isoprene rubber; a cellulosic binder, including carboxyl methyl cellulose (CMC), starch, hydroxypropyl cellulose, and regenerated cellulose; a polyalcoholic binder; a polyolefin binder, including polyethylene or polypropylene; a polyimide binder; a polyester binder; and a silane binder.

### All-solid-state batteries

The present invention relates to an all-solid-state battery comprising a positive electrode; a negative electrode; and a solid electrolyte layer between the positive electrode and negative electrode, wherein the positive electrode is the positive electrode of the present invention as described above.

The negative electrode may comprise a negative electrode current collector and a negative electrode active material layer located on the negative electrode current collector. Further, the negative electrode, like the positive electrode, may comprise a conductive material and a binder as desired. The negative electrode current collector, conductive material, and binder are as described above.

The negative electrode active material can be any material that can reversibly intercalate or deintercalate lithium ions (Li⁺), and any material that can react with lithium ions to reversibly form lithium-containing compounds.

For example, the negative electrode active material may include, but not limited to, one or more carbonaceous materials selected from the group consisting of crystalline artificial graphite, crystalline natural graphite, amorphous hard carbon, low crystalline soft carbon, carbon black, acetylene black, ketjen black, super-P, graphene, and fibrous carbon, Si-based materials, LiₓFe₂O₃ (wherein 0≤x≤1), LiₓWO₂ (wherein 0≤x≤1), SnₓMe₁₋ₓMe'_{y}O_{z} (wherein Me is Mn, Fe, Pb or Ge; Me' is Al, B, P, Si; elements of Group 1, 2 or 3 of the periodic table; halogen; 0<x≤1; 1≤y≤3; and 1≤z≤8) and other metal complex oxides; lithium metals; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, etc.; conductive polymers, such as polyacetylene; Li-Co-Ni based materials; titanium oxides; and lithium titanium oxides.

Further, the negative electrode may comprise a negative electrode current collector and a coating layer comprising metal-carbon composite particles positioned on the negative electrode current collector. This may mean an anodeless, which does not contain a negative electrode active material.

The negative electrode may be such that when the all-solid-state battery is charged, lithium ions pass through the coating layer to reach the surface of the negative electrode current collector, and are electrodeposited to form a lithium metal layer.

The metal-carbon composite particles may have a structure in which carbon particles and metal particles are mutually attached or one is coated on the surface of the other, and may be physically or chemically bonded.

The carbon particles may include natural graphite, artificial graphite, hard carbon, soft carbon, carbon black, acetylene black, ketjen black, channel black, furnace black, lamp black, thermal black, carbon nanotubes, fullerene, carbon fiber, and carbon fluoride.

The metal particles may be lithiophilic metals, for example, Ni, Cu, Ag, Au, Pt, Al, Zn, and Bi, and may be any one or a combination of two or more thereof. It is advantageous to form a stable and uniform lithium layer on the surface of the current collector by introducing a metal having the lithiophilic properties.

The negative electrode may be prepared by mixing a binder solution and the composite particles to prepare a slurry for forming a coating layer, and then applying and drying the slurry onto a negative electrode current collector. In this case, the binder may be any conventional binder used in the art.

The solid electrolyte layer is a layer of solid electrolyte, wherein the solid electrolyte is as described above. Accordingly, the solid electrolyte may comprise at least one selected from the group consisting of a sulfide-based solid electrolyte, a polymer-based solid electrolyte, and an oxide-based solid electrolyte, preferably a sulfide-based solid electrolyte.

As described above, because the positive electrode active material of the present invention includes a coating portion comprising the lithium titanium compound on the surface of the core portion, it is possible to prevent the lithium metal oxide, which is the positive electrode active material, from directly contacting the solid electrolyte, thereby reducing the side reaction occurring between the positive electrode active material and the solid electrolyte, and thereby reducing the interfacial resistance. Furthermore, the core portion can improve the long-term life characteristics of the all-solid-state battery by including not only the lithium metal oxide as the positive electrode active material, but also the lithium titanium compound. More specifically, when the all-solid-state battery is operated for hundreds of cycles or more, side reactions can occur from the outermost surface of the positive electrode active material, even if it contains a coating layer. It can be prevented by including the lithium titanium compound in the core portion, thereby improving the long-term life characteristics of the all-solid-state battery.

### [Mode for Practicing the Invention]

The present invention will now be further described with reference to the following examples, but the following examples are intended to illustrate the invention and are not intended to limit the scope of the invention.

### <Manufacturing of positive electrode active material for all-solid-state batteries>

### Example 1.

LiOH·H₂O and Ni_{0.8}Co_{0.1}Mn_{0.1}(OH)₂ were mixed in a weight ratio of 1.05:1 and titanium isopropoxide was added. The mixture was placed in a stainless steel crucible and heat treated at 750°C for 10 hours in an air atmosphere at a heating rate of 3°C/min, thereby producing a positive electrode active material with a particle diameter (D₅₀) of 5µm.

The positive electrode active material of Example 1 has a core-shell structure including a core portion and a coating portion on a surface of the core portion, wherein the core portion comprises LiNi_{0.8}Co_{0.1}Mn_{0.1}O₂ and a lithium titanium compound, exhibiting the concentration gradient in which the concentration of titanium decreases from the outermost surface of the core portion toward the center. Further, the coating portion comprises a lithium titanium compound, wherein the lithium titanium compound in the coating portion is included in an amount of 0.5 parts by weight based on 100 parts by weight of the core portion.

### Comparative Example 1.

LiOH·H₂O and Ni_{0.8}Co_{0.1}Mn_{0.1}(OH)₂ were mixed in a weight ratio of 1.1:1, and then the mixture was placed in a crucible made of stainless steel and subjected to a first heat treatment at 600°C for 5 hours in an air atmosphere to form a plasticized mixture, and then cooled. Subsequently, after crushing and sieving, the crushed plasticized mixture was then placed in an aluminum crucible and subjected to a secondary heat treatment at 800°C for 10 hours in an air atmosphere to obtain LiNi_{0.8}Co_{0.1}Mn_{0.1}O₂ with a particle diameter (D₅₀) of 5 µm.

The LiNi_{0.8}Co_{0.1}Mn_{0.1}O₂ powder, titanium isopropoxide and lithium ethoxide were added to ethanol and mixed for 24 hours. It was vacuum dried to remove ethanol as a solvent.

The positive electrode active material was prepared by heat treatment at 400°C for 4 hours after being loaded into a tube furnace with an inner diameter of 50mm and a length of 1000mm.

The positive electrode active material of Comparative Example 1 has a core-shell structure including a core portion and a coating portion on a surface of the core portion, wherein the core portion comprises LiNi_{0.8}Co_{0.1}Mn_{0.1}O₂, and the coating portion comprises a lithium titanium compound, wherein the lithium titanium compound in the coating portion is included in an amount of 0.5 parts by weight based on 100 parts by weight of the core portion.

### Comparative Example 2.

LiOH·H₂O and Ni_{0.8}Co_{0.1}Mn_{0.1}(OH)₂ were mixed in a weight ratio of 1.05:1 and titanium isopropoxide was added. The mixture was placed in a stainless steel crucible and heat treated at 650°C for 20 hours in an air atmosphere at a heating rate of 0.5°C/min, thereby producing a positive electrode active material with a particle diameter (D₅₀) of 5µm.

The positive electrode active material of Comparative Example 2 has a core-shell structure including a core portion and a coating portion on a surface of the core portion, wherein the core portion comprises LiNi_{0.8}Co_{0.1}Mn_{0.1}O₂ and a lithium titanium compound, but does not exhibit the concentration gradient in which the concentration of titanium decreases from the outermost surface of the core portion toward the center. Further, the coating portion comprises a lithium titanium compound, wherein the lithium titanium compound in the coating portion is included in an amount of 0.5 parts by weight based on 100 parts by weight of the core portion.

### Experimental Example 1. Analysis of the elements of the core portion and the coating portion of the positive electrode active material

Using a scanning electron microscope energy dispersive spectrometer (SEM-EDS), cross-sections of the positive electrode active materials prepared in Example 1, Comparative Example 1, and Comparative Example 2 were analyzed, and the titanium (Ti) content distributed in the coating portion and from the outermost surface of the core portion toward the center was confirmed by section, and the results are shown in Table 1 below.

**[Table 1]**

| | Coating portion | Distance from the outermost surface of the core portion to the center | | |
|---|---|---|---|---|
| | | 0 to less than 1 µm | 1 to less than 2 µm | 2 to 3 µm |
| Example 1 | 1370 ppm | 610 ppm | 250 ppm | 100 ppm |
| Comparative Example 1 | 2650 ppm | - | - | - |
| Comparative Example 2 | 920 ppm | 580 ppm | 810 ppm | 700 ppm |

In the results in Table 1 above, the positive electrode active material of Comparative Example 1 does not contain a lithium titanium compound in the core portion, so the concentration of a lithium titanium compound was measured only in the coating portion. The positive electrode active materials of Example 1 and Comparative Example 2 had lithium titanium compounds in the coating portion and the core portion, and the core portion of the positive electrode active material of Example 1 showed a concentration gradient in which the titanium concentration decreased from the outermost surface toward the center. In contrast, the positive electrode active material in Comparative Example 2 did not show a significant concentration gradient of titanium in the core portion, and the titanium was substantially evenly distributed in the core portion.

### Experimental Example 2. Measurement of the lifetime characteristics of all-solid-state batteries

81.9% by weight of each of the positive electrode active material of Example 1, Comparative Example 1 and Comparative Example 2, solid electrolyte (Li₆PS₅Cl, LPS) 15.6% by weight, conductive material (carbon black powder) 1.5% by weight and binder (PTFE) 1% by weight were first mixed at 5000 rpm for 1 min without a solvent using a Lab Blender (Waring). Then, a shear force of 100 N was applied to the above mixture and high shear mixing (using PBV-0.1L, Irie Shokai) was performed to prepare a dough by secondary mixing. The above dough was used to prepare the positive electrode active material layer of the free-standing structure using a two roll mill MR-3 (Inoue).

The positive electrode active material layer was placed on one side of the aluminum current collector with a thickness of 15 µm and pressurized to produce a positive electrode.

Lithium metal with a thickness of 40 µm was used as the negative electrode, and a Li₆PS₅Cl solid electrolyte film with a thickness of 50 µm was interposed between the positive electrode and the negative electrode, and then pressurized at a pressure of 500 MPa, to prepare all-solid-state batteries (jig cells) of Example 1, Comparative Example 1 and Comparative Example 2 with a driving pressure of 3 MPa and a capacity of 5 mAh.

The all-solid-state batteries of Example 1, Comparative Example 1 and Comparative Example 2 were charged at a rate (C-rate) of 0.33C until the voltage was 4.25V (vs. Li) and then cut-off at a rate of 0.1C while maintaining 4.25V (vs. Li). It was then discharged at a rate (C-rate) of 0.33C until the voltage at discharge was 3.0V (vs. Li), as 1 cycle. The charge and discharge was repeated for 50 cycles to measure the capacity retention rate of the discharge capacity, and the results are shown in Table 2 below.

**[Table 2]**

| | Initial capacity at 0.1C (mAh) | Initial efficiency at 0.1C (%) | Lifetime characteristics Capacity retention at 0.33C for 50 cycles (%) |
|---|---|---|---|
| Example 1 | 204 | 94.1 | 97 |
| Comparative Example 1 | 203 | 93.4 | 87 |
| Comparative Example 2 | 162 | 87.3 | 54 |

From the results in Table 2 above, the all-solid-state batteries of Example 1 and Comparative Example 1 showed similar initial capacities and initial efficiencies, but differed in their lifetime characteristics. This showed that the core portion of the positive electrode active material exhibits excellent lifetime characteristics when it contains a lithium titanium compound.

In addition, the all-solid-state battery in Comparative Example 2 exhibited poor initial capacity, initial efficiency, and lifetime characteristics. From this, it can be seen that even if a lithium titanium compound is present in the core portion of the positive electrode active material, the initial capacity, initial efficiency, and lifetime characteristics are all poor unless the core portion has a concentration gradient in which the titanium concentration decreases from the outermost surface toward the center.

The positive electrode active material of the present invention includes a lithium titanium compound in the coating portion and the core portion, and in particular, the lithium titanium compound in the core portion has a concentration gradient in which the titanium concentration decreases from the outermost surface of the core portion toward the center, so that the all-solid-state battery comprising it has excellent initial capacity, initial efficiency, and lifetime characteristics.

## Claims

1. A positive electrode active material for an all-solid-state battery, comprising:
a core portion comprising a positive electrode active material and a lithium titanium compound; and
a coating portion located on a surface of the core portion, comprising a lithium titanium compound,
wherein the core portion has a concentration gradient in which the titanium concentration decreases from the outermost surface toward the center.

2. The positive electrode active material for all-solid-state battery according to claim 1, wherein the core portion has a diameter of 3 to 10 µm.

3. The positive electrode active material for all-solid-state battery according to claim 1, wherein the lithium titanium compound of the core portion is present within a distance of up to 5 µm from the outermost surface of the core portion toward the center.

4. The positive electrode active material for all-solid-state battery according to claim 1, wherein the positive electrode active material of the core portion is a lithium metal oxide, and
wherein the lithium metal oxide is a secondary particle formed by agglomeration of a plurality of primary particles.

5. The positive electrode active material for all-solid-state battery according to claim 4, wherein the primary particles are spaced apart from neighboring primary particles in the secondary particles to form internal voids,
wherein the lithium titanium compound of the core portion is present in the internal voids.

6. The positive electrode active material for all-solid-state battery according to claim 1, wherein the coating portion comprises the lithium titanium compound in an amount of 0.1 to 5 parts by weight based on 100 parts by weight of the core portion.

7. The positive electrode active material for all-solid-state battery according to claim 1, wherein a concentration of titanium present in the coating portion is higher than a concentration of titanium present in the core portion.

8. A positive electrode for all-solid-state battery comprising the positive electrode active material according to any one of claims 1 to 7, a solid electrolyte, a conductive material, and a binder.

9. An all-solid-state battery comprising:
a positive electrode according to claim 8;
a negative electrode; and
a solid electrolyte layer between the positive electrode and negative electrode.

10. The all-solid-state battery according to claim 9, wherein the solid electrolyte comprises at least one selected from the group consisting of a sulfide-based solid electrolyte, a polymer-based solid electrolyte, and an oxide-based solid electrolyte.

11. The all-solid-state battery according to claim 10, wherein the solid electrolyte comprises a sulfide-based solid electrolyte.
